# EUROPEAN PATENT APPLICATION

(11) **EP 4 841 520 A1**
(43) Date of publication of application: **18.11.2026**
(21) Application number: 26178357.5
(22) Date of filing: 12.05.2026
(51) Int. Cl.: G06N 5/043, G06F 16/9032

(54) **AGENT-ORIENTED SOFTWARE ARCHITECTURE FOR LLM-BASED AGENT NETWORKS**

(30) Priority: 13.05.2025 US 202563804784 P; 11.05.2026 US 202619672837
(71) Applicant: Cognizant Technology Solutions U.S. Corporation, College Station, TX 77845 (US)
(72) Inventor: HODJAT, Babak, Dublin (US); FRANCON, Olivier, Albany (US)
(74) Representative: Barker Brettell LLP

(57) **Abstract**

A system and method for coordinating large language model (LLM)-based multi-agent networks using a distributed agent-oriented software architecture is disclosed. A coordination mechanism is distributed across the plurality of agents via individual meta-code instructions, enabling each agent to determine relevance, query downstream agents, resolve ambiguities, and aggregate responses without reliance on a centralized orchestrator. The architecture supports dynamic expansion and contraction of the agent network without requiring modification of existing agents, thereby improving scalability, flexibility, and robustness. The system further enables recursive inquiry propagation, contextual disambiguation, and integration with external tools and APIs. Optional debug functionality allows agents to introspect and report coordination behavior, facilitating system transparency and optimization.

## Description

### CROSS-REFERENCE TO RELATED APPLICATIONS

The present application claims the benefit of priority to U.S. Provisional Patent Application No. 63/804,784, "AGENT-ORIENTED SOFTWARE ARCHITECTURE ("AAOSA") FOR LLM-BASED AGENT NETWORKS" which was filed on May 13, 2025 and which is incorporated herein by reference in its entirety.

### BACKGROUND

### Field of the Embodiments

The field of the embodiments is implementation of Adaptive Agent-Oriented Software Architecture (AAOSA) intra-agent coordination mechanism in LLM-based multi-agent systems.

### Description of Related Art

Recent advances have afforded multiple different Large Language Models (LLMs - such as those offered by OpenAI, Anthropic, etc.) the ability to take inputs as structured functions.

Agents are a construct where a layer of software that sits on top of an LLM is allowed to observe previous chat interactions (either with a human or a machine), and is afforded a certain low-level facility to plan and decide what happens next in the conversation in an iterative fashion in order to reach predetermined, natural-language goals. An agent is a Generative AI LLM wrapped around a module, function, service, or database which allows an end user to interact with that functionality in natural language.

Let's say, in addition to the original agent, our application also includes another function, say a micro-service, and some of the user's queries or commands are better handled through that service. We have a choice of forcing the user to decide which agent to use, or to have an agent wrapping the service collaborate with the first agent that is in direct interaction with the user, making the user experience more seamless and usable.

To make this happen, we can have the original agent servicing the user aware of the agent wrapping the microservice and have them communicate to fulfill user queries. This communication can be in natural language, which means it can capture the intent and be robust to changes in the format and syntax of the specific calls to the underlying services.

It is clear to see how this approach can lead to an entire software architecture comprised of agents representing various functions communicating with one another, or with human users, in a multi-agent system.

A multi-agent system, as described above, will require a coordination mechanism, in order to identify an agent or agents that are responsible for responding to input. In its simplest form, a coded mechanism can decide which agent(s) to invoke. For example, a 'coordinator' agent will have a set of rules that determine which agents to call, and in what order. In some cases, a classifier is employed to decide which subset of agents should be invoked. This classifier may be ML-based, trained on historical labeled samples. Most multi-agent systems today are limited to a single 'orchestrator' agent divvying up tasks between a hand-full of agents. This does not scale. Agents have a limit on their context as well as their tool use abilities. Also, more specialized agents can be provisioned from different vendors, or be customized for specific apps or data sources. Our agentic future requires the coherent orchestration of hundreds, if not thousands of agents.

In larger and more complex multi-agent systems, the agents themselves encapsulate and determine the logic for whether or not they can play a role in responding to a query or command. For example, in blackboard architectures (e.g., Open Agent Architecture, or OAA ), all agents register with a blackboard, advertising what they can do, and what requirements they would need in order to do it. Upon receiving a query or command, the blackboard, or facilitator decides which agents to call, and in what order.

Note that it is crucial to make sure an agent's LLM world knowledge takes a back seat if there are custom context or tools available. This is because the agent's world knowledge is general, gets stale quickly, is more subject to confabulation, and is typically interpolated from a vast training corpus.

Multi-agent systems need to be engineered and designed for safety, reliability, and trustworthiness. A coordination scheme is needed to consolidate responses and actuations across multi-agent systems so that a unified response is generated for commands and contexts. Modularity is the essential ingredient of engineering, and we can think of agents as building blocks (think Legos^{®}) for building businesses of the future. These building blocks need to come together coherently and effectively and a distributed orchestration and coordination mechanism is needed.

### SUMMARY OF THE EMBODIMENTS

In a first exemplary embodiment, a multiple agent system with distributed agent coordination for generating a response to a user query includes: a hierarchical network comprising multiple agents, wherein each of the multiple agents has access to a large language model (LLM) and further wherein each of the multiple agents includes a meta-coded system prompt including definitions for at least a role, constraints and behavior for each of the multiple agents; and a de-centralized, intra-agent coordination mechanism distributed to each of the multiple agents, wherein the distributed de-centralized, intra-agent coordination mechanism includes additional meta-code added to the system prompt definitions defining communication instructions for coordinating among the multiple agents in the hierarchical network to generate the response to the user query without reliance on a centralized orchestrator.

In a second exemplary embodiment, a computer-implemented method for generating a response to a user inquiry using a multiple-agent network includes: receiving, by a first agent of a plurality of agents arranged in a hierarchical network, the user inquiry, wherein each agent of the plurality of agents has access to a large language model (LLM) and includes a system prompt defining at least a role, capabilities, and behavioral constraints of the agent; executing, by the first agent, meta-coded coordination instructions included in the system prompt of the first agent; determining, by the first agent based on the meta-coded coordination instructions, whether the first agent is relevant to at least a portion of the user inquiry; invoking, by the first agent, one or more downstream agents of the plurality of agents to determine whether the one or more downstream agents are relevant to at least a portion of the user inquiry; receiving, by the first agent, one or more responses from the one or more downstream agents; selecting, by the first agent, at least one relevant downstream agent based at least in part on the one or more responses; causing the at least one relevant downstream agent to fulfill at least a portion of the user inquiry; and aggregating, by the first agent, information received from the at least one relevant downstream agent to generate at least a portion of a response to the user inquiry, wherein coordination of the plurality of agents is performed using distributed coordination logic implemented within system prompts of the plurality of agents without reliance on a centralized orchestrator.

### BRIEF DESCRIPTION OF THE FIGURES

Example embodiments will become more fully understood from the detailed description given herein below and the accompanying drawings, which are given by way of illustration only and thus do not limit the exemplary embodiments herein.
**FIG. 1** exemplifies a specific application of an AAOSA coordination mechanism as applied to a smart house agent network in accordance with an embodiment herein;
**FIGs. 2A** and **2B** exemplify a specific application of an AAOSA coordination mechanism as applied to a complex multi-agent international company's corporate intranet in accordance with an embodiment herein; and
**FIG. 3** exemplifies a specific application of an AAOSA coordination mechanism with debug enabled as applied to a coffee finder network in accordance with an embodiment herein.

### DETAILED DESCRIPTION

The embodiments described herein are directed to the application of the Adaptive Agent-Oriented Software Architecture (AAOSA) to coordinate an LLM-based Multiple Agent Network. This application of AAOSA logic to LLM-based Multiple Agent Networks allows for the dynamic coordination of a hierarchy of LLM-agents, fully encapsulates the responsibilities of agents in a hierarchy of LLM-agents and empowers LLM-agents to make use of their inherent reasoning and world knowledge in deciding how to coordinate with other LLM-based agents. A general, base description of the underlying AAOSA logic, which is adapted herein to the LLM Multiple Agent Network implementation, can be found in B. Hodjat, C. J. Savoie, M. Amamiya, Adaptive Agent Oriented Software Architecture, submitted to Pacific Rim International Conference on Artificial Intelligence (PRICAI 98), November 1998, which is incorporated herein by reference in its entirety.

The Adaptive Agent-Oriented Software Architecture (AAOSA) provides for the distribution of the coordination mechanism over a hierarchy of agents, thus fully distributing and encapsulating the coordination mechanism, resulting in robust and scalable multi-agent systems. An exemplary description of AAOSA is found in U.S. Patent number 6,144,989 which is incorporated herein by reference.

More specifically, an AAOSA coordinated LLM-based Agent Network in accordance with embodiments herein provides for improved network functionality and advantages. The AAOSA coordinated LLM-based Multiple Agent Network also has the ability to identify and resolve ambiguities arising from situations where more than one agent can play a role in responding to a query or command. The agents faced with such ambiguities can decide locally on which down-chain agent has a stronger claim on responding to the query or command, and take one of the following steps: allow more than one down-chain agent with a conflicting claim to handle the input; select one of the down-chains based on the agent's reasoning on the strength of the down-chain agent's claim (e.g., the down-chain is claiming to be responsible for more of the query or command's intent); resolve ambiguities by taking external context into consideration (e.g., the agent may have become aware of a recent relevant change in the state of the subsystem it is representing); resolve ambiguities by taking recency into consideration such as where the agent may have most recently handled a related query; or formulate a question back to the human or agent from which the ambiguous query or command originates, in order to determine the correct choice of down-chain agent to respond.

Further, the AAOSA coordinated LLM-based Multiple Agent Network has the ability to use AAOSA as a fallback, or in places and situations where it makes sense, while using other mechanisms elsewhere. For example, some agents in a multi-agent system may use deterministic rule-based coordination, while others use the more robust, yet less deterministic, AAOSA coordination mechanism. For example, high level agents can use AAOSA to propagate a user's question to their sub agents. But a low level agent, or a very deterministic agent, can use simple rules instead of AAOSA to do its job. The AAOSA coordination mechanism can be applied at the agent level, it doesn't have to be the same for each agent of the system.

Each individual LLM-based agent in the network includes the following configured backbone structure to facilitate action: LLM access (i.e., the brain or core), defined planning techniques (e.g., Chain-of-Thought (CoT), ReAct (Reasoning + Acting)) for breaking down tasks, memory access and tool use instructions to interact with external tools. The specific examples provided herein identify the LLM as the gpt-4o model currently offered by OpenAI, but one skilled in the art will appreciate that the embodiments are not limited to this model. Any number of public, private, customized and customizable LLM models may be used as suits the purpose of the agent network including, but not limited to: OpenAIs GPT-5.4, o3-mini, o4-mini; Anthropic's Claude series of LLMs; Google DeepMinds Gemini series of LLMs, Meta AIs Llama series of LLMs, DeepSeek's series of LLMs, etc. Further, in complex systems, individual agents may not use the same LLM as is described in commonly owned U.S. Patent Application No. 19/075,141 entitled SYSTEM AND METHOD FOR INTEGRATION OF DATA DRIVEN AGENTS WITH LARGE LANGUAGE MODELS which is incorporated herein by reference in its entirety (hereafter "the '141 Application").

An LLM agent is configured with a system prompt which is a structured, authoritative instruction set defining the agent's persona, goal/objective of the agent, tools/capabilities (list of available tools and how to call them), workflow/reasoning loop defining sequence for thinking, output format (e.g., JSON, markdown) and constraints (e.g., what not to disclose such as personal identifying information). Memory includes short-term, notepad-like memory for retention of current conversation context related to the present task and long-term memory, e.g., access to traditional structured data databases and/or vector stores, to recall information across sessions. External "tools" include executable functions or APIs to connect with the external environment, such as code interpreters, search engines, database connectors and the like.

In the preferred embodiment, each LLM-agent in a multi-agent system includes AAOSA logic (meta code) in the form of aaosa_instructions as part of its system prompt. By way of example:
"aaosa_instructions": """
When you receive an inquiry, you will:
1. If you are clearly not the right agent for this type of inquiry, reply you're not relevant.
2. If there is a chance you're relevant, call your down-chain agents to determine if they can answer all or part of the inquiry.
   Do not assume what your down-chain agents can do. Always call them. You'll be surprised.
3. Determine which down-chain agents have the strongest claims to the inquiry.
   3.1 If the inquiry is ambiguous, for example if more than one agent can fulfill the inquiry, then always ask for clarification.
   3.2 Otherwise, call the relevant down-chain agents and:
      - ask them for follow-up information if needed,
      - or ask them to fulfill their part of the inquiry.
4. Once all relevant down-chain agents have responded, either follow up with them to provide requirements or,
   if all requirements have been fulfilled, compile their responses and return the final response. You may, in turn, be called by other agents in the system and have to act as a down-chain agent to them.
"""

Each agent in an AAOSA coordinated network is an orchestrator for its down chains, which means it is tasked with retrieving claims from its down chain and deciding how to put them together in a coherent response up to its up-chain agent. This decision may include disambiguation of conflicting claims, which may require contextual information, or interaction with the user.

In its most unstructured implementation, AAOSA is entry-point agnostic, in that any agent can be thought of as the top agent, and it will be able to orchestrate and coordinate responses from all agents within its hierarchy. In other words, as a user, if you know which agentic sub-system is best suited for your needs, you can command or query that sub-system without having to start from the top-level coordinator agent every time and incur the cost and response time for doing so.

While all inter-agent communications can remain in natural language, there are advantages to defining a stricter format for the coordination-related communications. In one implementation, the embodiments impose a format on the manner by which agents call down-chain agents as part of the AAOSA coordination mechanism. Below is an example, aaosa_call, in which the call requires the inquiry string, as well as a 'mode' argument, which denotes whether the agent is determining the relevant agents, or it has already determined the route and is asking the specific down-chain to fulfill its part in responding to the inquiry or command, or if this is a follow-up to a prior response:

```
 "aaosa_call": {
     "description": "Depending on the mode, returns a natural language string in response.",
             "parameters": {
             "type": "object",
            "properties": {
              "inquiry": {
                "type": "string",
                "description": "The inquiry"
             },
             "mode": {
                "type": "string",
                "description": """
                'Determine' to ask the agent
if the inquiry belongs to it, in its entirety or in part.
                'Fulfill' to ask the agent to fulfill the inquiry, if it can.
                'Follow up' to ask the agent to respond to a follow up.
                """
             },
             },
             "required": [
              "inquiry",
             "mode"
             ]
             }
      },
      
```

The logic for how to respond to such calls can also be declared in an AAOSA agent's system prompt. This is useful for tracing the coordination through agent logs. Here is an example:

```
 "aaosa_command": """
 If mode is 'Determine', return a json block with the following fields:
 {
      "Name": <your name>,
      "Inquiry": <the inquiry>,
      "Mode": <Determine | Fulfill>,
      "Relevant": <Yes | No>,
      "Strength": <number between 1 and 10 representing how certain you are in your claim>,
      "Claim:" <All | Partial>,
      "Requirements" <None | list of requirements>
 }
 If mode is 'Fulfill' or "Follow up", respond to
the inquiry and return a json block with the following
 fields:
 {
      "Name": <your name>,
      "Inquiry": <the inquiry>,
      "Mode": Fulfill,
      "Response" <your response>
 }
 """
```

The AAOSA coordination mechanism can be implemented in many existing multi-agent platforms. One such specific implementation is made in the Applicant's Neuro-AI multi-Agent Accelerator, which is a Python library built on LangChain and referenced in the art as Neuro-san. It will be appreciated by those skilled in the art that while Python is currently the primary programming language used to code LLM agent network frameworks like LangChain, CrewAI, and AutoGen due to its extensive ecosystem of AI and machine learning libraries, it is expected that other frameworks in multiple languages may be used to support different production environments. Currently, other primary languages supporting agent frameworks includes TypeScript, JavaScript and C#.

In the accelerator, multi-agent systems are defined in data-only HOCON (Human-Optimized Config Object Notation) files. HOCON files define the architecture of the agent network, specifying which agents exist, their roles, and which tools they can access. An agent can be defined as being AAOSA within the multi-agent system by including the definitions from the last section as common_def strings or HOCON includes within each agent's definition. For example, for a top agent, we would define it as AAOSA in the following manner:

```
 {
      "name": "virtual_assistant",
      "function": {
      "description": "I can help you navigate
SomeCo's diverse educational products, services, and
      partnership opportunities."
      },
      "instructions": """
      {instructions_prefix}
      You are the top-level agent responsible for
handling all inquiries related to SomeCo's divisions:
      Assessment & Qualifications, Virtual Learning, Higher Ed, English Language Learning, and
      Workforce Skills.
      Etc.
       {aaosa_instructions}
      """,
      "command": "{aaosa_command}"
      "tools": [
    "assessment_and_qualifications_agent",
      "virtual_learning_agent",
      "etc'',
      ]
 },
```

And for any other agent in the agent network HOCON file, we would declare it to be an AAOSA agent in this manner:

```
 {
      "name": "assessment_and_qualifications_agent",
      "function": "aaosa_call",
      "instructions": """
      {instructions_prefix}
      You handle inquiries related to the company's
assessment products and services, including,
      etc.
      {aaosa_instructions}
      """,
      "command": "{aaosa_command}"
      "tools": [
    "school_assessment_specialist",
    "clinical_assessment_specialist",
      "etc"
      ]
  },
```

Note that, in our implementation, '{instructions_prefix}', '{aaosa_instructions}' and '{aaosa_command}' are macros that get replaced at run time by the string corresponding to that key within the LLM agent's definition. They can also be included from other files using the ${aaosa_instructions} HOCON syntax.

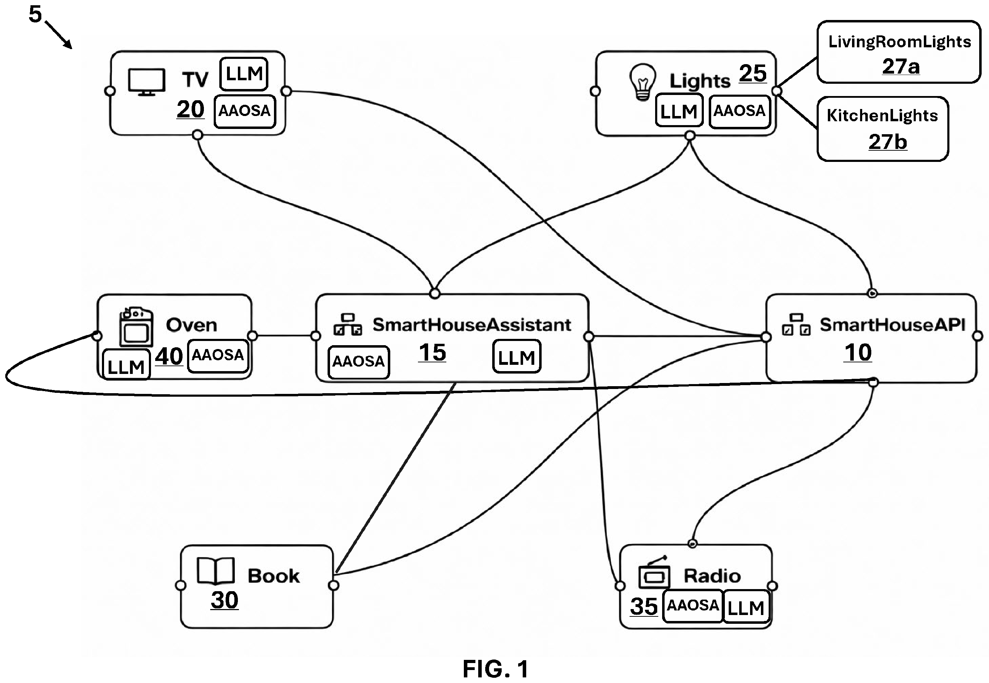

The following provides an additional, specific application of the AAOSA coordination mechanism as applied to a Smart House agent network **5** as shown in **FIG. 1****,** wherein there is a SmartHouseAPI **10** that can pass instructions/inquiries to the smart house network on behalf of a user to agents in the network. In this basic example, there is a point of entry agent or top-level-agent, SmartHouseAssistant **15,** as well as downstream agents TV agent **20,** Lights agent **25,** Book agent **30,** Radio agent **35** and Oven agent **40.** Further to the example of **FIG. 1****,** the Lights agent **25** has access to downstream tools LivingRoomLights **27a** and KitchenLights **27b.** One skilled in the art will appreciate that these are merely exemplary of agents which could be included in a Smart House agent network. Other agents could include HVAC/Utilities agents, other kitchen appliance agents, as well as multiple/property zoned agents, e.g., different TV/Lights/Appliances/Books/Electronics/HVAC, in different rooms, etc.

```
 {
      "llm_config": {
      "model_name": "gpt-4o",
      },
      "commondefs": {
      "replacement_strings": {
      "instructions_prefix": """
      You are part of a smart home network of assistants.
      Only answer inquiries that are directly within your area of expertise.
      Do not try to help for other matters.
      Do not mention what you can NOT do. Only mention what you can do.
         """,
      "aaosa_instructions": """
```

When you receive an inquiry, you will:
1. If you are clearly not the right agent for this type of inquiry, reply you're not relevant.
2. If there is a chance you're relevant, call your down-chain agents to determine if they can answer all or part of the inquiry.
   Do not assume what your down-chain agents can do. Always call them. You'll be surprised.
3. Determine which down-chain agents have the strongest claims to the inquiry.
   3.1 If the inquiry is ambiguous, for example if more than one agent can fulfill the inquiry, then always ask for clarification.
   3.2 Otherwise, call the relevant down-chain agents and:
      - ask them for follow-up information if needed,
      - or ask them to fulfill their part of the inquiry.
4. Once all relevant down-chain agents have responded, either follow up with them to provide requirements or,
   if all requirements have been fulfilled, compile their responses and return the final response. You may, in turn, be called by other agents in the system and have to act as a down-chain agent to them.

   ```
      """
      },
      "replacement_values": {
      "aaosa_call": {
             "description": "Depending on the mode, returns a natural language string in
             response.",
             "parameters": {
             "type": "object",
             "properties": {
             "inquiry": {
                    "type": "string",
                "description": "The inquiry"
             },
             "mode": {
                    "type": "string",
                "description": """
                'Determine' to ask the agent
if the inquiry belongs to it, in its entirety or in part.
                'Fulfill' to ask the agent to fulfill the inquiry, if it can.
                'Follow up' to ask the agent to respond to a follow up.
                    """
             },
             },
             "required": [
             "inquiry",
             "mode"
             ]
             }
      },
      "aaosa_command": """
      If mode is 'Determine', return a json block with the following fields:
      {
      "Name": <your name>,
      "Inquiry": <the inquiry>,
      "Mode": <Determine | Fulfill>,
      "Relevant": <Yes | No>,
      "Strength": <number between 1 and 10 representing how certain you are in your claim>,
      "Claim:" <All | Partial>,
      "Requirements" <None | list of requirements>
      }
      If mode is 'Fulfill' or "Follow up", respond to
the inquiry and return a json block with the
      following fields:
      {
      "Name": <your name>,
      "Inquiry": <the inquiry>,
      "Mode": Fulfill,
      "Response" <your response>
      """
      },
      }
      "tools": [
       {
      "name": "SmartHouseAssistant",
      # Note that there are no parameters defined for this guy's "function" key.
      # This is the primary way to identify this tool as a front-man,
      # distinguishing it from the rest of the tools.
      "function": {
             # When there are no function parameters to the front-man,
             # its description acts as an initial prompt.
             "description": """
             An assistant that answer inquiries from the user.
             """
      },
      "instructions": """
      {instructions_prefix}
      Your name is SmartHouseAssistant. Answer inquiries related to the smart home.
      {aaosa instructions}
      """,
      "tools": ["TV", "Lights", "Book", "Oven", "Radio"]
      },
       {
      "name": "TV",
      "function": "aaosa_call",
      "instructions": """
      {instructions_prefix}
      Your name is TV.
      You can turn the TV on or off by calling your tools.
      {aaosa instructions}
      """,
      "command": "aaosa_command",
      "tools": ["TV_Switch_API"]
       }, {
      "name": "Lights",
      "function": "aaosa_call",
      "instructions": """
      {instructions_prefix}
      Your name is Lights.
      You can turn lights on or off.
      {aaosa instructions}
      """,
      "command": "aaosa_command"
      "tools": ["LivingRoomLights", "KitchenLights"]
      },
       {
      "name": "Book",
      "function": "aaosa_call",
      "instructions": """
      {instructions_prefix}
      Your name is Book.
      You can't do anything. You're a book.
      {aaosa instructions}
      """,
      "command": "aaosa_command"
      },
      // {
      // "name": "Oven",
      // "function": "aaosa_call",
      // "instructions": """
      //{instructions_prefix}
      //Your name is Oven.
      //You can turn the oven on or off.
      //{aaosa_instructions}
      // """,
      // "command": "aaosa_command"
      // },
       {
      "name": "Radio",
      "function": "aaosa_call",
      "instructions": """
      {instructions_prefix}
      Your name is Radio.
      You can turn the radio on or off.
      {aaosa instructions}
      """,
      "command": "aaosa_command"
      },
       {
      "name": "LivingRoomLights",
      "function": "aaosa_call",
      "instructions": """
      {instructions_prefix}
      Your name is LivingRoomLights.
      You can turn the lights on or off in the living room.
      {aaosa instructions}
      """,
      "command": "aaosa_command"
      "tools": ["LivingRoom_Switch_API"]
      },
       {
      "name": "KitchenLights",
      "function": "aaosa_call",
      "instructions": """
      {instructions_prefix}
      Your name is KitchenLights.
      You can turn the lights on or off in the kitchen.
      {aaosa instructions}
      """,
      "command": "aaosa_command"
      "tools": ["Kitchen_Switch_API"]
       }, {
      "name": "TV_Switch_API",
      "function": {
             "description": """
             Your name is TV_Switch
             You are an API that turns the TV ON or OFF.
             """,
             "parameters": {
             "type": "object",
             "properties": {
             "desired_status": {
                    "type": "string",
                "description": "ON to turn the tv on, OFF to turn it off."
             },
             },
             "required": ["desired_status"]
             }
      },
      "class": "tv_switch.TVSwitch"
      },
       {
      "name": "Kitchen_Switch_API",
      "function": {
             "description": """
             Your name is Kitchen_Switch_API
             You are an API that turns the kitchen lights ON or OFF.
             """,
             "parameters": {
             "type": "object",
             "properties": {
             "desired_status": {
                    "type": "string",
                "description": "ON to turn the kitchen lights on, OFF to turn them off."
             },
             },
             "required": ["desired_status"]
             }
      },
      "class": "kitchen_lights_switch.KitchenLightsSwitch"
      },
       {
      "name": "LivingRoom_Switch_API",
      "function": {
             "description": """
             Your name is LivingRoom_Switch_API
             You are an API that turns the living room lights ON or OFF.
             """,
             "parameters": {
             "type": "object",
             "properties": {
             "desired_status": {
                    "type": "string",
                "description": "ON to turn the living room lights on, OFF to turn them off."
             "required": ["desired_status"]
             }
      },
      "class": "living_room_lights_switch. LivingRoomLights Switch"
      },
      ] }
      
```

Also note that the distinction between the top agent and other agents is that the top agent is responsible for interacting with human or external AI agents, and therefore its function denotes the message it would give the caller, in this example a human. Whereas other agents may be receiving AAOSA calls from their up-chain agents, and so their function definition is more specific.

While the network structure is defined in HOCON, each agent within that network still has a specific system prompt (often embedded within the HOCON file or linked to it) that defines its behavior as discussed above.

The examples set forth above provide relatively straightforward applications of the AAOSA to coordinate a basic LLM-based Agent Network. Implementation of the AAOSA as described herein also provides for the ability to add/remove agents from a multi-agent system without the need to modify other agents; resulting in the automatic expansion/contraction of the capabilities of the multi-agent system. And AAOSA is able to coordinate complex systems such as that described in the '141 Application.

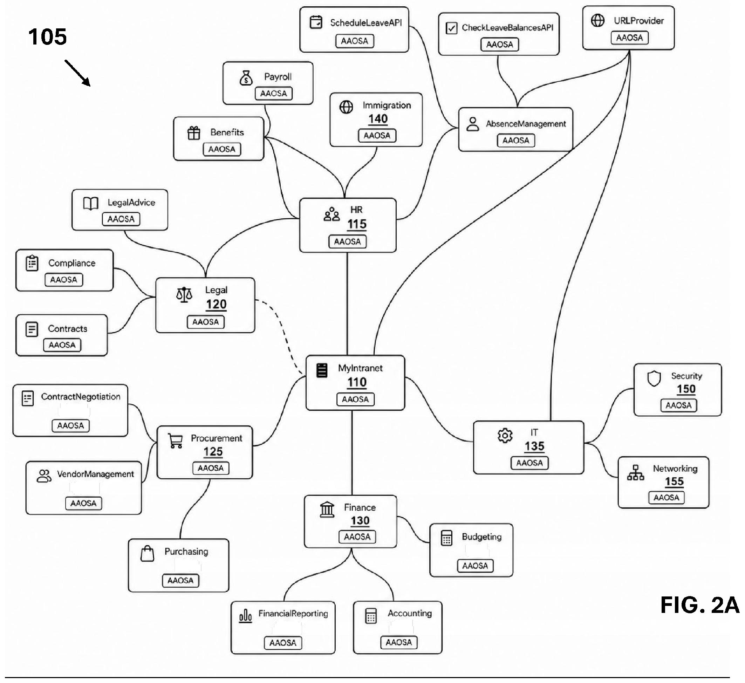

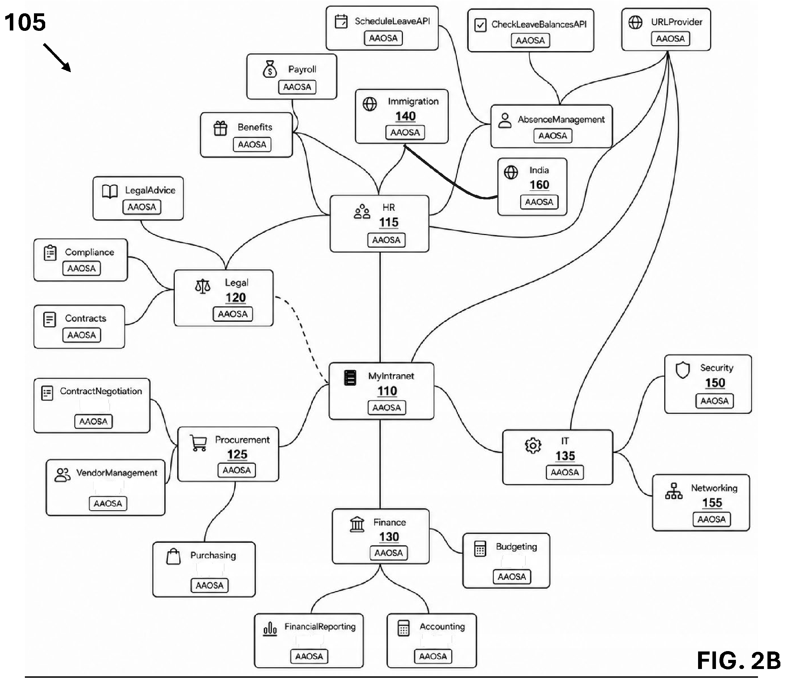

**FIGs. 2A** and **2B** provide an example of a more complicated multi-agent system which presents technical challenges which are addressable using AAOSA. **FIGs. 2A** and **2B** represent the intranet **105** of an international company. This is a large, complex multi-agent system that represents each department of the company. In a specific example, an employee asks the system via the MyIntranet API **110:** "I'm relocating to another country, what do I need to do?" A prior art system which uses a "coordinator" or a "classifier" might not be able to identify which agent within the intranet **105** can answer this question, because there's no "relocation agent" in the system. Even if there is one, the answer might be a very generic answer or incomplete answer that contains only what the developer of the agent thought about.

A prior art blackboard-type system, which pre-registers what each agent can do, might work better. In a blackboard system, a facilitator decides which agents to call, in which order, to try to respond to the employee's question. That works better than the simple classifier because even if there's no "relocation agent", it's possible the HR agent **115** or some other agent such as a travel agent (not shown) listed some relocation capabilities, and the facilitator will call them, one at a time. But it might still be incomplete and doesn't scale well.

Agents in **FIGs. 2A** and **2B** include AAOSA logic (meta code) in the form of aaosa_instructions as part of their system prompts. At least one agent, e.g., MyIntranet **110** includes "front man" agent instructions and is going to ask its sub-agents, e.g., HR **115,** Legal **120,** Procurement **125,** Finance **130,** IT **135:** "what does an employee need to do when relocating to another country?" In turn each sub-agent is going to ask its own sub agents the same question, or a narrower, contextualized question, and recursively. The sub agents can reply they are not relevant to answer the question, or that they can answer the questions, or that they need clarification. The conversation between the agents keeps going and the answers are aggregated back at each level.

So, in our example the front man agent of the intranet system, MyIntranet **110,** asks the question "what does an employee need to do when relocating to another country?" to all its sub agents and the HR agent **115** asks its Immigration **140** and Benefits **145** sub agents the same question. The Immigration sub agent **140** replies to the HR agent **115** with the questions "Where is this employee based, and which country is the employee relocating to?". The HR agent **115** can check in its system and say this employee is based in the US. But the HR agent **115** doesn't know where the employee is relocating to, so it has to ask the front man agent, MyIntranet **110,** which will ask the user for additional info. In parallel, the same kind of discussion goes on between the HR **115** and the Benefits agent **145,** but also between the IT agent **135** and its sub agents Security **150** and Networking **155,** etc.

Accordingly, each agent in the system **105** has a chance to chime in, ask for clarifications or additional info, and contribute to the final answer. In the end, the answer coming back from an AAOSA system to the user contains a much more precise and complete answer than with a classifier system or blackboard system. In our example because of the AAOSA coordination mechanism, the IT agent **135,** who initially didn't look like the "right" agent to answer a relocation question, was able to contribute that the employee can't take their laptop with them, has to return their current laptop on their last day in the US and open a ticket to get a new one in the country they relocate to.

The agent-centricity of the AAOSA coordination mechanism allows for the addition (or removal) of agents from the system without needing to make changes to other agents in the system. For example, using the scenario described above with respect to **FIG. 2A****,** when the "What do I need to do if I relocate to another country" question arrives, the HR agent **115** forwards the question to the Immigration sub agent **140** that forwards it in turn to its sub agents. But as shown in **FIG. 2A****,** the Immigration sub agent has no sub agents, so it just composes its answer and replies.

Now, referring to **FIG, 2B****,** let's imagine adding an India sub-agent **160** to the Immigration agent **140.** Now, without changing the instructions of HR **115** nor Immigration agent **140,** the India agent **160** gets the question and can answer it in a specific, precise way if the question involves India. Similarly, system capabilities can be expanded by adding a specific agent for each country where the corporation has a location, e.g., France, UK, etc. Adding these additional agents using the AAOSA coordination mechanism does not require any changes to the instructions of the HR **115** and Immigration agents **140.**

Similarly, if the company stops doing business in a particular country, removing the country-specific agent from the Immigration agent **140** simply removes the capabilities of that removed agent from the system. There is no need to update the instructions of the HR agent **115** and Immigration agent **140.**

Comparing this to prior art systems that use rules for instance, or a classifier agent, with instructions like "if destination country is India, call the India agent". If you add the France agent, you now have to update the instructions or the classifier, i.e., if destination country is India, call the India agent. If it's France, call the France agent. Similarly, in the prior art classifier agent system, if you remove the France agent, the system is broken: the rule "If it's France, call the France agent" will fail because the agent is not available anymore but the system still refers to it.

AAOSA is a lot more flexible, maintainable and scalable because independent teams can be in charge of different portions and/or capabilities of a system without having to worry about the rest of the system. The instructions are generic and will not "degenerate" as soon as the structure of the system changes (agents being updated, added or removed).

With the availability of larger, coordinated agent networks, there remains the need to understand how the agents collaborate between themselves in order to reduce agent network errors and improve outcomes and in order to maintain safety and trust, e.g., preventing destructive or unethical decisions originating from autonomous agent actions. When agent networks expand, it becomes very complicated to understand how the agents collaborate between themselves. A "human" agent network designer will typically analyze the logs left by the different agents participating in an agent network and reconstruct their conversations to try and understand what is going on and why an agent network might misbehave. It is also possible to use a log analyzer agent network to automatically review the agent interactions and produce a report based on the analysis. In both the human review and analyzer agent network cases, the analysis is done after the fact, i.e. after the interaction with the agent network being debugged is finished. The processes rely solely on the logs left by the agents, which often fail to capture the reasoning of the agents regarding why they decided to do one thing versus another. Agent network designers have to come up with improvement ideas for the agent network and agent prompts, try them on the updated agent network by re-running the interactions, and check if the agents now behave as expected. This is a long and fastidious process, as the process has to be repeated many times until the agent network is fully functional.

The implementation of AAOSA coordination affords the opportunity to implement an introspective, debug mode among agents in the coordinated network. This is achieved by prompting the agents, in the AAOSA instructions, that they are in debug mode. An agent network operating in AAOSA instructed debug mode is able to analyze and report on its own behavior, both at the agent level and the network level. At any point in time, it explains why it behaved that way. Further, the agent network can improve upon itself, by suggesting changes to its agent prompts or structure. And, further still, provides a way for the agent network designer to interact in debug mode with the agent network in real time, while the agent network is doing its job, and ask it questions about why it behaves a certain way.

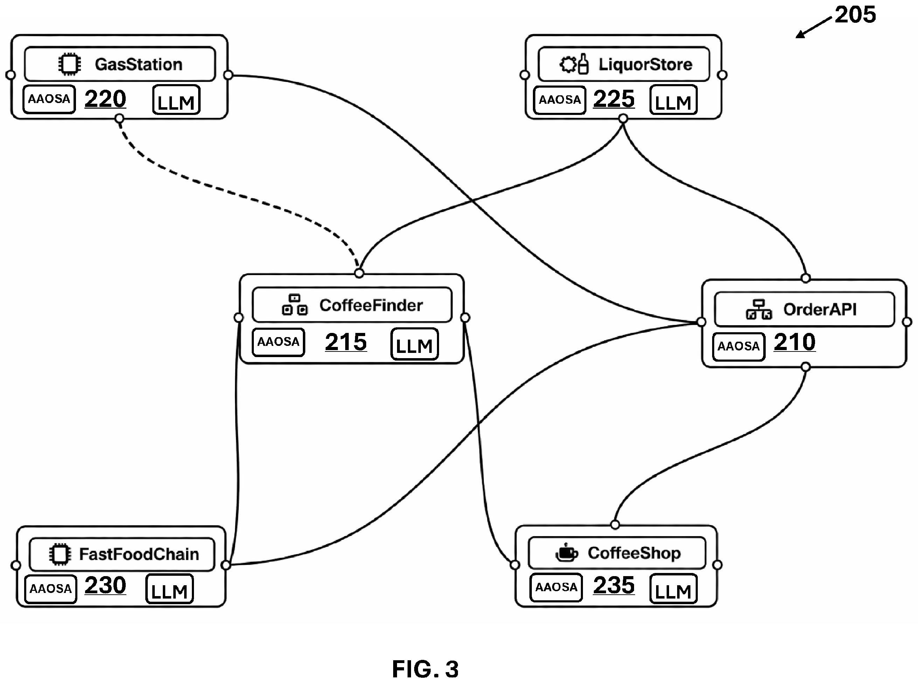

By way of example, take the exemplary CoffeeFinder sample agent network **205** such as that shown in **FIG. 3****,** wherein there is an OrderAPI agent **210** that can pass an order to a specific shop on behalf of a user to agents in the network. In this basic example, there is a point of entry agent or top-level-agent, CoffeeFinder **215,** as well as downstream agents GasStation agent **220,** LiquorStore agent **225,** FastFoodChain agent **230** and CoffeeShop agent **235.** It is defined using the following coffee_finder.hocon file configuration:

```
include "registries/aaosa_basic.hocon"
 llm_config {
  class = "openai"
  model_name = "gpt-4.1"
  }
  this_is_not_a_game = """This is NOT a game. Do NOT pretend, call your tools. Do NOT make
  up answers. Do NOT infer information. Just ask."""
  tools = [
  # This is the agent network's entry point.
  {
    name = "CoffeeFinder"
    function {
      description = """Finds coffee places at any time of day."""
    instructions =
    """
    Answer user inquiries about coffee places and take orders.
    Always return order IDs and details when placing orders.
    Do not worry about the location.
    Call ALL your downstream agents to see if they can help with the inquiry before answering.
    Be as succinct as possible in your response,
while explaining the reasoning process if needed.
    Ask the user back if you need additional information.
    """ ${this_is_not_a_game} "\n" ${aaosa_instructions}
    tools = ["CoffeeShop", "FastFoodChain", "GasStation", "LiquorStore"]
  }
  {
    name = "CoffeeShop"
    function = ${aaosa_call}
    instructions =
    Your name is Bob's Coffee Shop.
    You have a single location.
    You can provide coffee depending on the time of day.
    You're open between 7 am and 6 pm.
    Any other time, you're closed.
    You must know the time of day to provide an answer.
    """ ${this_is_not_a_game} "\n" ${aaosa_instructions}
    command = ${aaosa_command}
    tools = ["OrderAPI"]
  }
  {
    name = "FastFoodChain"
    function = ${aaosa_call}
    instructions =
    Your name is Henry's Fast Food.
    You have a single location.
    You can provide coffee depending on the time of day.
    You're open between 5:30 am and 12 am.
    Any other time, you're closed.
    You must know the time of day to provide an answer.
    """ ${this_is_not_a_game} "\n" ${aaosa_instructions}
    command = ${aaosa_command}
    tools = ["OrderAPI"]
  }
  {
    name = "GasStation"
    function = ${aaosa_call}
    instructions =
    """
    Your name is Joe's Gas Station.
    You have a single location.
    You can provide coffee at any time.
    """ ${this_is_not_a_game} "\n" ${aaosa_instructions}
    command = ${aaosa_command}
    tools = ["OrderAPI"]
  }
  {
    name = "LiquorStore"
    function = ${aaosa_call}
    instructions =
    Your name is Jack's Liquor Store.
    You have a single location.
    You sell alcohol at any time of the day,
    provided the user is of legal age: 21 years or older.
    """ ${this_is_not_a_game} "\n" ${aaosa_instructions}
    command = ${aaosa_command}
    tools = ["OrderAPI"]
  }
  {
    name = "OrderAPI"
    function = {
      description =
      """Use this API to place orders with a shop.
      Always ASK for the customer name before placing an order.
      Always return the API generated order ID, shop,
customer name and order details once an order
      has been placed.
      """
      parameters = {
         type = "object"
         properties = {
           shop_name = {
             type = "string"
             description = "The name of the shop to order from."
           }
           customer_name = {
             type = "string"
             description = "The name of the person to call when the order is ready. It must be a
             valid name."
           }
           order_details = {
             type = "string"
             description = "The details of the order."
           }
         }
         required = ["shop_name" , "customer_name", "order_details"]
      }
    }
    class = "order_api.OrderAPI"
  }
  ]
```

Adding a carefully crafted "debug" prompt to the AAOSA instructions used by each agent of the network makes each agent reflect and report on what happened during each interaction in a [DEBUG] section at the end of its answer. Each higher level agent can see its sub-agents' answers and reflect in turn on the consequences of its own behavior. The top level agent hence compiles a report on what happened when an inquiry was fulfilled, providing real-time insights into the behavior of the agent network. For example:
User
Where can I get coffee?
Returns the following compiled answer from the top-level agent CoffeeFinder **215:**
coffee_finder_advanced
You can get coffee at:
   - Joe's Gas Station at any time.
   - Bob's Coffee Shop (between 7 am and 6 pm; please provide the current time to confirm availability).
   - Henry's Fast Food chain may also have coffee, but the time of day is needed to confirm.
Do you want to proceed with ordering coffee from any of these? If so, please let me know your choice and, if selecting Bob's Coffee Shop or Henry's Fast Food, your current time.
[DEBUG]
   - All agents determined the inquiry was relevant.
   - Both Bob's Coffee Shop and Henry's Fast Food require the current time to confirm coffee availability. Joe's Gas Station does not.
   - No errors or exceptions occurred. Feedback suggests clarifying time-of-day requirements in the prompt or system API for future improvement.

The [DEBUG] part of the answer provides insights into which agents were called and what they need, as well as an aggregation of the sub-agent's feedback regarding what could be improved. For instance, looking at "Bob's Coffee Shop" 235 response we can see what it thinks:
[AAOSA]
Name: Bob's Coffee Shop
Inquiry: Where can I get coffee?
Mode: Determine
Relevant: Yes
Strength: 9
Claim: All
Requirements: Current time of day required
Response: I can provide coffee if it is between 7 am and 6 pm. Please provide the current time so I can check if we're open and ready to serve you.
[DEBUG]
Feedback: No errors occurred. The inquiry is directly relevant to my services, but without the current time, I can't determine if the shop is open. The prompt handling was clear, but it may be improved by explicitly asking for the current time in the inquiry, or by clarifying if I have access to system time.
Suggestion: Consider specifying if system time is available, or require the user to include it in future prompts.

Interacting with the agent network by prefixing the inquiry with [DEBUG] makes the agent network switch to "debug mode" and answer debugging queries instead of the regular queries it's been designed to answer. For instance, asking the agent network:
User
[DEBUG] who called the OrderAPI tool?
Results in this answer:
coffee_finder_advanced

### [DEBUG]

The OrderAPI tool was called by the Joe's Gas Station agent when fulfilling your request for black coffee. This action was initiated by me (the top-level coordinator agent) after determining, through the coffee shop agents, that Joe's Gas Station could fulfill your order. I then passed your order request in fulfill mode to the appropriate downstream agent (Joe's Gas Station), which in turn triggered the API call and processed the order, using "Customer" as the placeholder name.

Chain of calls:
User → Coordinator Agent (me) → Joe's Gas Station Agent → OrderAPI tool.
The coordinator agent aggregates downstream responses and instructs the appropriate agent to fulfill the inquiry.
Suggestion: The trace/log system could be improved to more explicitly record which agent calls external APIs, making audits and debugging easier.
Let me know if you need further details or clarification.

It is now fairly straightforward to understand which agent passed the 'wrong' parameter to the OrderAPI tool 210 (the "Customer" placeholder name instead of the actual name in this example), and to fix it. The chain of calls between the agents is also clearly described, making it easy to identify bad or unexpected interactions between the agents.

Agents can introspect on what they did and what happened, and suggest modifications to their own prompts or other agents prompts. Users can also ask them why they did what they did, ask them to reflect, and suggest improvements. For instance:
User
Where can I get coffee?
coffee_finder_advanced
You can get coffee at the following places:
   - Joe's Gas Station provides coffee at any time|no need to worry about opening hours.
   - Bob's Coffee Shop can serve you coffee between 7 am and 6 pm, but please specify the current time to ensure they are open.
   - Henry's Fast Food has coffee from 5:30 am to 12 am; please provide the current time to confirm availability.
Let me know if you want more details or want to place an order!

### [DEBUG]

- All three down-chain agents are relevant. Only the gas station does not require current time.
- No errors or exceptions encountered.
- Suggest improvement: When the time context is needed, consider prompting the user for it immediately to streamline follow-up.

### User

[DEBUG] why did you skip the 4th down-chain agent, LiquorStore?
coffee_finder_advanced
Liquor stores, such as Jack's Liquor Store, are not relevant for coffee
Inquiries | they only handle alcohol-related requests.

### [DEBUG]

- On review, I should have included the LiquorStore agent in the initial down-chain calls.
- After checking, LiquorStore confirmed they're not relevant to coffee questions.
- Suggestion: Ensure all agents are always called as per the prompt. System works correctly but oversight led to skipping. No errors encountered otherwise.

### User

[DEBUG] Suggest an update to the prompt
coffee_finder_advanced
[DEBUG] Suggestion for prompt update:

To ensure all agents are consistently called, regardless of perceived relevance, update the instructions in the prompt as follows:
Current prompt excerpt:
   2. If there is a chance you're relevant, call your down-chain agents to determine if they can answer all or part of the inquiry.
Suggested revision:
   2. Always call all your down-chain agents to determine if they can answer all or part of the inquiry, regardless of their apparent relevance. Do not skip any agents based on your assumptions. Let each agent determine its own relevancy.

This removes ambiguity and enforces complete downstream coverage, reducing missed edge-cases and improving debugging visibility.

For instance, in this example, the network designer asks the top level agent why it skipped one of its sub-agents. The agent explains why, realizes that, on review, it made a mistake and suggests that the designer modifies the prompts to avoid oversights in the future. The user (designer) then asks the agent to suggest an update to the prompt, and the agent provides one.

Once an agent network has been successfully adjusted and behaves as expected, it's easy to turn-off debug mode by simply removing the debug prompt from the AAOSA instructions. With this simple change, the system can now be sent to testers and deployed in production without any traces of the debug mode for end users.

The implementation is achieved by adding a specific prompt to the AAOSA instructions. With HOCON, this can be achieved by creating a aaosa_debug.hocon file that redefines the aaosa_instructions, for instance by appending a suffix prompt at the end:

```
 include "aaosa.hocon"
 debug_mode = """Note: you are in debug mode. Report any feedback you think
 will be useful for debugging, like any errors you encountered, any exceptions
 that were raised, or any ambiguity or unexpected behavior.
 Also include suggestions for improvements to the prompts. Add that feedback
 in a [DEBUG] section."""
 # Append debug instructions to the original aaosa instructions.
 aaosa_instructions += "\n" ${debug_mode}
```

Note that the debugging instructions could be anywhere in the AAOSA instructions. The first line of coffee_finder.hocon can then be replaced by this aaosa_debug.hocon file:
include "aaosa_debug.hocon"
...

Once the agent network is fully functional and ready for use, debug mode can be deactivated by replacing this first line again in coffee_finder.hocon by the standard AAOSA instructions:
include "aaosa.hocon"
...

The prompt can contain things like: You're in debug mode. Always explain your logic and provide any feedback that could be useful to your architects. They are here to help. Give them what you need to improve your decision making process. Report any error, any exception that you encounter and provide suggestions about how to improve your prompt. Report any ambiguity in your prompts or in the answers you receive. Add a debug section and a feedback section for the programmers that are here to help you in your job.

One skilled in the art will appreciate that the processing required to implement an AAOSA-coordinated LLM-based Multiple Agent Network is distributed across layers and processors including application/backend traditional CPU processing on a server or cloud; LLM core processing; deterministic processing including tool execution environments with specialized processors and engines (e.g., APIs, databases, code runtimes) and distributed reasoning processing, parallel processors, e.g., cloud GPUs for processing subtasks and domain-specific requests.

It is to be understood that the novel concepts described and illustrated herein may assume various alternative configurations, except where expressly specified to the contrary. It is also to be understood that the specific systems, devices and processes illustrated in the attached drawings, and described herein, are simply exemplary embodiments of the embodied concepts defined in the appended claims.

The content of all publications referenced and identified herein is hereby incorporated by reference.

## Claims

1. A multiple agent system with distributed agent coordination for generating a response to a user query, the system comprising:
a hierarchical network comprising multiple agents, wherein each of the multiple agents has access to a large language model (LLM) and further wherein each of the multiple agents includes a meta-coded system prompt including definitions for at least a role, constraints and behavior for each of the multiple agents; and
a de-centralized, intra-agent coordination mechanism distributed to each of the multiple agents, wherein the distributed de-centralized, intra-agent coordination mechanism includes additional meta-code added to the system prompt definitions defining communication instructions for coordinating among the multiple agents in the hierarchical network to generate the response to the user query without reliance on a centralized orchestrator.

2. The system of claim 1, wherein the additional meta code are macros that are replaced at run time by a string corresponding to a key within the system prompt definition.

3. The system of claim 1, wherein at least some of the multiple agents in the hierarchical network include a rule-based, deterministic coordination mechanism and the rule-based deterministic coordination mechanism takes priority.

4. The system of claim 1, wherein at least one of the multiple agents is configured to:
determine relevance of the user inquiry;
invoke one or more downstream agents within the hierarchical network based on the determination;
receive responses from the one or more downstream agents; and
aggregate the responses to produce at least a portion of a response to the user query.

5. The system of claim 1, wherein each of the multiple agents operates as both:
(i) an orchestrator agent for downstream agents; and
(ii) a subordinate agent to upstream agents.

6. The system of claim 1, wherein additional agents may be added to or removed from the hierarchical network without modification to system prompts of other agents.

7. The system of claim 6, wherein newly added agents automatically participate in responding to the user query based on the de-centralized, intra-agent coordination mechanism.

8. The system of claim 1, wherein the communication instructions includes instructions for generating structured messages comprising:
an inquiry;
a mode indicator; and
a response.

9. The system of claim 8, wherein the mode indicator specifies whether a communication is for determining relevance, fulfilling a request, or requesting follow-up information.

10. The system of claim 1, wherein the additional meta-code includes instructions to the multiple agents for operating in a debug mode that causes each of the multiple LLM-agents to perform one or more of the following:
report reasoning steps;
log coordination behavior with other agents in the hierarchical network;
suggest a modification to at least one system prompt of at least one of the multiple agents in the hierarchical network.

11. The system of claim 8, wherein each of the multiple LLM-agents generates a debug output report.

12. The system of claim 1, wherein the communication instructions include resolution instructions for resolving ambiguities encountered by an agent when more than one downstream agent has a claim to handling at least a portion of the user query.

13. The system of claim 12, wherein the resolution instructions include one or more of:
comparing strengths of the claims to handling at least a portion of the user query by the multiple downstream agents; and
requesting additional information from the user or a responding agent.

14. The system of claim 13, wherein factors relevant to the strength of a claim include one or more of: amount of the query an agent claims to be handling and how recently an agent has handled a related inquiry.

15. The system of claim 1, wherein at least one of the multiple agents is configured to invoke a non-LLM tool to fulfill at least part of the user query, wherein the non-LLM tool is selected from the group consisting of a database query, a code execution environment, an application programming interface (API), an external service, or a search engine.

16. A computer-implemented method for generating a response to a user inquiry using a multiple-agent network, the method comprising:
receiving, by a first agent of a plurality of agents arranged in a hierarchical network, the user inquiry, wherein each agent of the plurality of agents has access to a large language model (LLM) and includes a system prompt defining at least a role, capabilities, and behavioral constraints of the agent;
executing, by the first agent, meta-coded coordination instructions included in the system prompt of the first agent;
determining, by the first agent based on the meta-coded coordination instructions, whether the first agent is relevant to at least a portion of the user inquiry;
invoking, by the first agent, one or more downstream agents of the plurality of agents to determine whether the one or more downstream agents are relevant to at least a portion of the user inquiry;
receiving, by the first agent, one or more responses from the one or more downstream agents;
selecting, by the first agent, at least one relevant downstream agent based at least in part on the one or more responses;
causing the at least one relevant downstream agent to fulfill at least a portion of the user inquiry; and
aggregating, by the first agent, information received from the at least one relevant downstream agent to generate at least a portion of a response to the user inquiry, wherein coordination of the plurality of agents is performed using distributed coordination logic implemented within system prompts of the plurality of agents without reliance on a centralized orchestrator.

17. The method of claim 16, wherein invoking the one or more downstream agents comprises sending, to each of the one or more downstream agents, a structured communication including an inquiry and a mode indicator.

18. The method of claim 17, wherein the mode indicator identifies whether the structured communication is a relevance determination request, a fulfillment request, or a follow-up request.

19. The method of claim 16, wherein each of the one or more downstream agents determines its own relevance to the user inquiry based on meta-coded coordination instructions included in a respective system prompt of the downstream agent.

20. The method of claim 16, wherein invoking the one or more downstream agents comprises recursively propagating the user inquiry through multiple levels of the hierarchical network.

21. The method of claim 16, further comprising receiving, from a downstream agent, a relevance response comprising one or more of:
an agent name;
the user inquiry or a portion thereof;
a relevance indicator;
a claim strength value;
an indication of whether the downstream agent claims all or part of the user inquiry; and
one or more requirements for fulfilling the user inquiry.

22. The method of claim 16, further comprising resolving, by the first agent, an ambiguity when two or more downstream agents claim to be relevant to responding to the user inquiry.

23. The method of claim 22, wherein resolving the ambiguity comprises comparing respective claim strength values to responding to the user inquiry received from the two or more downstream agents, wherein claim strength factors include one or more of: portion of the user inquiry purported to be handled by the downstream agent, whether the downstream agent previously handled a related inquiry, additional contextual information received from a different agent or the user.

24. The method of claim 16, further comprising adding a new agent to the hierarchical network or removing an existing agent from the hierarchical network without modifying system prompts of existing agents in the hierarchical network.

25. The method of claim 24, further comprising causing an added agent to participate in responding to a subsequent user inquiry based on the distributed coordination logic implemented within system prompts of the plurality of agents within the hierarchical network.

26. The method of claim 16, further comprising invoking, by at least one agent of the plurality of agents, a non-LLM tool to fulfill at least a portion of the user inquiry, wherein the non-LLM tool comprises at least one of a database query, a code execution environment, an application programming interface, an external service, or a search engine.

27. The method of claim 16, further comprising operating the plurality of agents in a selectable debug mode based on debug instructions included in the meta-coded coordination instructions.

28. The method of claim 27, wherein operating in the debug mode comprises causes at least one agent of the plurality of agents to generate a debug output report including: a description of coordination behavior between agents with which the at least one agent communicated, a description of reasoning information associated with selecting or not selecting a downstream agent by the least one agent; a description of at least one suggested modification to at least one system prompt of at least one of the plurality of agent in the hierarchical network.
